# EUROPÄISCHE PATENTSCHRIFT

(11) **EP 0 776 994 B1**
(45) Veröffentlichungstag und Bekanntmachung des Hinweises auf die Patenterteilung: **28.04.1999**
(21) Anmeldenummer: 96117917.3
(22) Anmeldetag: 08.11.1996
(51) Int. Cl.: C25B 1/10, C25B 9/00

(54) **Elektrolyseur mit flüssigem Elektrolyten**
Fluid electrolyte electrolyzer
Electrolyseur à électrolyte fluide

(30) Priorität: 30.11.1995 DE 19544585
(43) Veröffentlichungstag der Anmeldung: 04.06.1997
(73) Patentinhaber: DORNIER GmbH, 88039 Friedrichshafen (DE)
(72) Erfinder: Schmid, Ottmar, Dipl.-Ing., 88677 Markdorf (DE); Tillmetz, Werner, Dr., 88131 Lindau (DE)
(74) Vertreter: Meel, Thomas

(56) Entgegenhaltungen:
- EP-A- 0 239 169
- WO-A-93/24677
- DE-A- 2 334 647
- US-A- 4 331 523
- US-A- 5 401 371

## Beschreibung

Die Erfindung betrifft einen Elektrolyseur mit flüssigem, bevorzugt alkalischem Elektrolyten nach dem Oberbegriff des Patentanspruchs 1.

Der prinzipielle Aufbau eines derartigen Elektrolyseurs, wie er in der Literatur beschrieben ist, und wie er auch in der Erfindung angewandt wird, sieht folgendermaßen aus. Er umfaßt:
- zwei Elektroden, zwischen denen ein Diaphragma angeordnet ist, wobei in den Elektroden eine Elektrolytlösung durch Kapillarkräfte fixiert ist;
- eine an die Kathode angrenzende erste Produktkammer
- eine an die Anode angrenzende zweite Produktkammer
- eine von der ersten Produktgaskammer durch eine Membran getrennte Kammer für das Edukt.
Das Diaphragma kann porös sein, so daß in den Poren des Diaphragmas die Elektrolytlösung fixiert werden kann. Möglich ist aber auch die Verwendung einer ionenleitenden dichten Schicht.

Die einzelnen Elemente sind zwischen zwei Endflanschen angeordnet und können zu einer Zelle verpreßt werden. In den Produktkammern sowie in der Eduktkammer sind dabei bevorzugt Abstandhalter angeordnet. Sie dienen insbesondere zur Übertragung der Zellpreßung und damit zur Gewährleistung von geringen Übergangswiderständen. Es sind aber auch Vorrichtung bekannt, in denen die Produktkammern als Ausnehmungen in die Elektroden eingearbeitet sind (einseitige Profilierung der Elektrode). In diesem. Fall werden keine Abstandshalter für die Produktkammern benötigt.

Mehrere Zellen werden zu einem Stapel (Stack) auf- oder nebeneinandergeschichtet, wobei die Einzelzellen elektrisch in Reihe geschaltet sind.

Als Edukt wird insbesondere Wasser oder eine wässrige Lösung verwendet. Als Produktgase ergeben sich dann Sauerstoff und Wasserstoff.

Einzelheiten zur Verfahrensführung sowie zu den zu verwendenden Membranen, Edukten und Elektrolytlösungen sind dem Fachmann allgemein bekannt.

Die Stromführung innerhalb der Zelle sollte möglichst so gestaltet sein, daß sich geringe Spannungsabfälle und somit geringe Wirkungsgradeinbußen ergeben. Hierbei ist grundsätzlich eine möglichst homogenen Stromverteilung über die gesamte Querschnittsfläche der Zelle bzw. der Elektroden anzustreben. Bei einer inhomogenen Stromdichteverteilung bestimmt die maximale Stromdichte die Zellspannung und damit den erreichbaren Wirkungsgrad.
Dabei ist auch zu beachten, daß die Membran im allgemeinen eine relativ niedrige elektrische Leitfähigkeit aufweist, so daß eine bipolare Stromübertragung direkt über die Membrane kaum realisiert werden kann.

Aufgabe der Erfindung ist es, einen Elektrolyseur zu schaffen, dessen innere Stromführung im Bezug auf die Vermeidung unerwünschter Spannungsabfälle sowie Homogenität der Stromverteilung optimiert ist. Eine weitere Aufgabe ist es, einen Elektrolyseur mit hoher Wirtschaftlichkeit zu schaffen.

Diese Aufgabe wird mit einem Elektrolyseur nach Anspruch 1 gelöst. Vorteilhafte Ausbildungen sind Gegenstände weiterer Ansprüche.

Als Einzelzelle ist der erfindungsgemäße Elektrolyseur wie folgt aufgebaut: Er umfaßt die folgenden Element (in der Reihenfolge ihrer Anordnung)
- eine Eduktkammer
- eine Membran (**4**)
- eine kathodenseitige Produktkammer
- eine poröse Kathode (**8**)
- ein Diaphragma (**10**),
- eine poröse Anode (**12**), wobei in den Poren von Anode (**12**) und Kathode (**8**) ein flüssiger Elektrolyt fixiert ist,
- eine anodenseitige Produktkammer,
Die Stromzuführung und Stromabführung von und zu den Elektroden erfolgt erfindungsgemäß über zwei elektrisch leitende Platten.
Die erste dieser Platten ist zwischen Membran und der kathodenseitigen Produktkammer angeordnet. Um den Stofftransport innerhalb der Zelle (H₂O-Zufuhr von der Eduktkammer zur Kathode) zu gewährleisten, ist sie perforiert ausgebildet. Diese erste Platte ist z.B direkt mit einem Pol einer Stromquelle verbunden. Alternativ kann die leitfähige Platte mit Stromanschlußelementen in einem der Endflansche, die den Elektrolyseur von zwei Seiten einfassen, elektrisch verbunden sein. Dies kann im einfachsten Falle durch elektrische Leitungen geschehen, die außerhalb der Zelle angeordnet sind.

Durch diese Anordnung wird die im allgemeinen elektrisch schlecht leitende Membran überbrückt.
Benachbart zur anodenseitigen Produktkammer, auf der den Elektroden abgewandten Seite, ist die zweite elektrisch leitfähige Platte vorhanden. Sie ist z.B. mit dem anderen Pol der Stromquelle oder mit den Stromanschlußelementen des zweiten Endflansches verbunden. Für diese zweite Platte wird keine Perforierung benötigt.
Die beiden leitfähigen Platten erstrecken sich bevorzugt über den gesamten Querschnitt der Zelle.

In einer bevorzugten Ausführungsform sind in den beiden Produktkammern jeweils elektrisch leitfähige Abstandshalter enthalten, wobei Abstandshalter und leitfähige Platte z.B. unmittelbar aneinander liegen. Der Strom innerhalb der Zelle fließt dann von der ersten leitfähigen und perforierten Platte zum Abstandhalter der kathodenseitigen Produktkammer und zur Kathode; von der Anode zu dem Abstandshalter der anodenseitigen Produktkammer und zu der zweiten leitfähigen Platte.

In Fällen, in denen die Produktkammern in die Elektroden eingearbeitet sind (durch einseitige Profilierung der Elektrode) liegen die beiden leitfähigen Platten direkt auf den erhabenen Bereichen der profilierten Elektroden.

Werden mehrere Einzelzellen der beschriebenen Art (ohne die beiden Endflansche) auf- oder nebeneinander angeordnet und elektrisch hintereinandergeschaltet, so entsteht ein (bipolarer) Zellstapel, im weiteren auch als Stack bezeichnet. In diesem Fall wird die erste leitfähige Platte einer Einzelzelle elektrisch mit der zweiten Platte der vorhergehenden Zelle verbunden.

Die beschriebenen Ausführungen eignen sich insbesondere für kleinere Zellquerschnitte ( < 200 cm²). Bei größeren Zellquerschnitten können vorteilhaft die im folgenden beschriebenen Maßnahmen ergriffen werden.

In einer vorteilhaften Ausführung wird die elektrische Verbindung zwischen der ersten leitfähigen Platte und den Anschlußelementen in den Endflanschen (im Falle einer Einzelzelle) bzw. der zweiten leitfähigen Platte der vorhergehenden Zelle (bei einem Stack) folgendermaßen ausgebildet:
die erste Platte ist im wesentlichen über deren gesamten Umfang mit einem leitfähigen Kontaktelement verbunden. Im Falle eines runden Querschnitts von Zelle und Platte hat dieses leitfähige Kontaktelement die Form eines Rings (Kontaktring). Dieser Kontaktring wird an die Stromanschlußelemente an dem entsprechenden Endflansch (im Falle der Einzelzelle) bzw. im Falle eines Stacks an die zweite leitfähige Platte der vorhergehenden Zelle gedrückt. In einer vorteilhaften Ausführung geschieht dies durch einen O-Ring, der sich in der Nut des Kontaktrings befindet.
Diese Ausbildung ist insbesondere für Zellquerschnitte von bis ca. 500 cm² geeignet. Sie hat den Vorteil, daß innerhalb der ersten Platte beim Übergang in die zweite leitfähige Platte der benachbarten Zelle eine radiale Stromverteilung über den gesamten Umfang erreicht wird.

Da im Falle eines Stacks die zweite leitfähige Platte einer Einzelzelle gerade am Übergang zwischen zwei Zellen liegt, wird sie im folgenden auch als Trennplatte bezeichnet.

Für noch größere Querschnitte ist die folgende Ausbildung, die sowohl in der Einzelzelle als auch in einem Stack eingesetzt werden kann, besonders geeignet: die Membran wird mit leitfähigen Durchbrechungen versehen, die über die gesamte Membranfläche, z.B. in regelmäßiger Anordnung, verteilt sind. Die oben erwähnt erste leitfähige Platte kann dann wegfallen.

Mit dieser Anordnung wird eine außerordentlich homogene Stromführung über den gesamten Querschnitt der Zelle bzw. der Elektroden erreicht.

Für alle erwähnten Ausführungen gilt: Die Querschnittsform der Zellen und die entsprechende Form der wesentlichen Elemente ist beliebig, jedoch bevorzugt rund oder rechteckig.

Die Erfindung wird anhand von Fig. näher erläutert. Es zeigen:
- Fig. 1: eine erste Ausbildung der erfindungsgemäßen Vorrichtung (Explosionsdarstellung)
- Fig. 2, 3: eine zweite Ausbildung der erfindungsgemäßen Vorrichtung
- Fig. 4, 5, 6: eine dritte Ausbildung der erfindungsgemäßen Vorrichtung (Fig. 4 in Explosionsdarstellung).

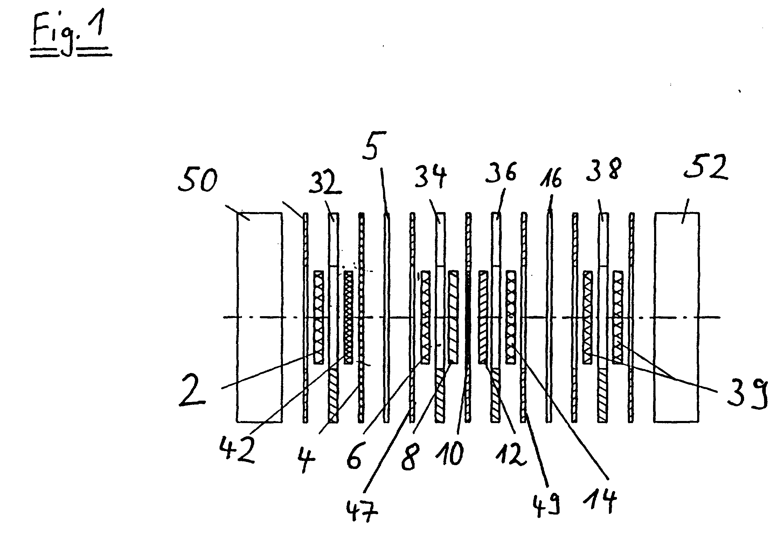

Fig. 1 zeigt eine erste Ausbildung der erfindungsgemäßen Vorrichtung (explodiert) . Es handelt sich hierbei um einen Elektrolyseur aus einer Einzelzelle. Die Zelle ist links und rechts von zwei Flanschen **50,52** eingefaßt. Die dazwischenliegenden Elemente werden mit Hilfe von Zugankern (hier nicht dargestellt) zusammengepreßt. Von links nach rechts sind u.a. die für die prinzipielle Wirkungsweise wesentlichen Elemente zu erkennen: Abstandshalter **2** in der Eduktkammer (bestehend aus einem Kunststoffmaterial), Membran **4** und Membranstützschicht **42** (um die Membran vor mechanischer Beschädigung zu schützen, z.B. Vlies, Lochscheiben, kalandrierte Gewebe), erste leitfähige Platte **5** (perforiert), Abstandshalter **6** (leitfähig) der kathodenseitigen Produktkammer, Kathode **8**, Diaphragma **10**, Anode **12**, Abstandshalter **14** (leitfähig) der anodenseitigen Produktkammer, zweite leitfähige Platte **16**.
Zwischen einzelnen Elementen sich zusätzliche Dichtungen **47**,**49** vorhanden. In der hier gezeigten Ausführung ist zusätzlich zwischen zweiter Platte **16** und Endflansch **52** eine Flüssigkeitskammer (H₂O) mit Abstandshaltern **39**, die in einem gemeinsamen Rahmen **38** angeordnet sind, zu Kühlzwecken vorhanden.
Die Stromeinspeisung in die Zelle geschieht z.B. dadurch (hier nicht dargestellt), daß eine Stromquelle mit den beiden Platten **5** und **16** verbunden wird. Alternativ können in den Endflanschen **50**,**52** Stromanschlußelemente enthalten sein, die z.B. über elektrische Leitungen mit der ersten leitfähigen Platte **5** bzw. der zweiten leitfähigen Platte **16** verbunden sind. Diese Leitungen verlaufen außerhalb der Zelle.
Vorteilhaft sind die einzelnen Abstandshalter **2**,**6**,**14** jeweils in separaten Rahmen **32**,**34**,**36** angeordnet. Bei einer Zelle mit runden Querschnitt ergeben sich ringförmige Rahmen.
In dem Rahmen **36** für den Abstandshalter **14** der anodenseitigen Produktkammer ist zusätzlich die Anode **12** angeordnet. In dem Rahmen **34** für den Abstandshalter **6** der kathodenseitigen Produktkammer ist zusätzlich die Kathode **8** angeordnet.

In einer weiteren, hier nicht dargestellten Ausführung können
- Abstandshalter (6) der kathodenseitigen Produktkammer
- Kathode (8)
- Diaphragma (10)
- Abstandshalter (14) der anodenseitigen Produktkammer
- Anode (12)
in einem gemeinsamen Rahmen angeordnet sein.

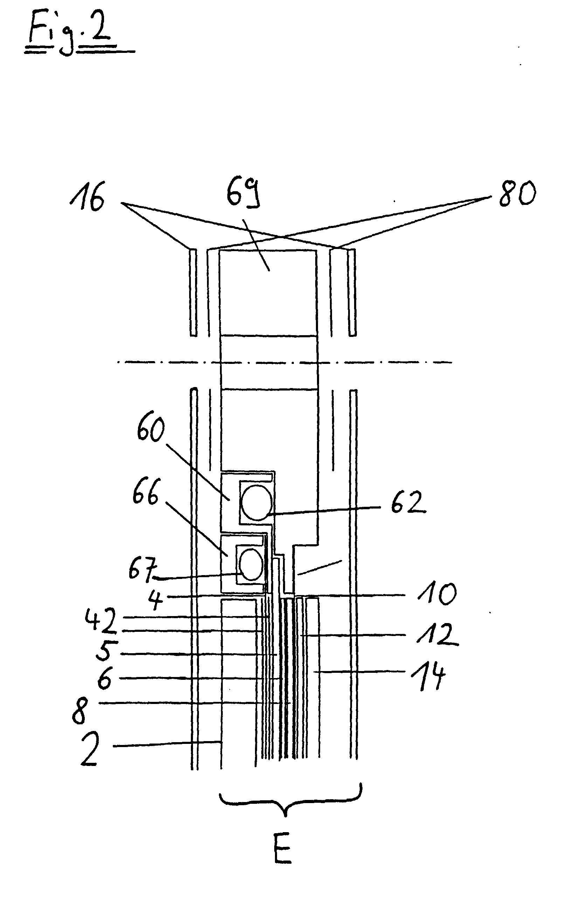

Fig. 2 zeigt eine einzelne Zelle **E** innerhalb eines Stacks (teilweise explodiert). Die Abfolge der einzelnen Elemente (Abstandshalter **2** in der Eduktkammer, Membran **4** und Membranstützschichten **42** auf beiden Seiten der Membran **4,** erste leitfähige Platte **5**, Abstandshalter **6** der kathodenseitigen Produktkammer, Diaphragma **10**, Anode **12**, Abstandshalter **14** der anodenseitigen Produktkammer, zweite leitfähige Platte **16**) entspricht der in Fig. 1 gezeigten Abfolge einer Einzelzelle, jedoch ohne die Endflansche **50**,**52**. Durch die Anordnung mehrerer Einzelzellen kommt die zweite leitfähige Platte **16** jeder Einzelzelle nun gerade am Übergang zwischen zwei Einzelzellen zu liegen. Sie wird deshalb im folgenden auch als Trennplatte bezeichnet.
Die in der Fig. 2 links gezeichnete Platte **16** ist also die zweite leitfähige Platte der benachbarten, hier nicht dargestellten, Einzelzelle; die rechts abgebildete Platte **16** ist die zweite leitfähige Platte der hier dargestellten Zelle.
Die Zelle und die sie bildenden Elemente haben in dieser Ausführung einen kreisförmigen Querschnitt. Die erste Platte **5** ist im wesentlich über ihren gesamten Umfang mit einem Kontaktelement **60**, hier als Kontaktring ausgebildet, verbunden. Dieser Kontaktring **60** wiederum wird mit Hilfe eines O-Rings **62**, der sich in der Nut des Kontaktrings befindet, an die Trennplatte **16** gedrückt. Die Preßkraft des O-Rings **62** sorgt für eine stetige Anpressung des Kontaktrings **60** an die Trennplatte **16** und damit insgesamt für einen guten elektrischen Kontakt zwischen der Trennplatte **16** und der perforierten Platte **5**.

In einem Absatz des Kontaktrings **60** wird die Membran **4** wasserseitig eingelegt und mit einer Membranfassung **66**, hier einem Membranring, der wiederum einen O-Ring **67** enthält, abgedichtet. Alternativ kann die Abdichtung der Membran über eine beidseitig zur Membran angeordnete Flachdichtung erfolgen.

Die hier innerhalb eines Stacks angewandte Überbrückung der Membran durch die Anordnung eines Kontaktrings **60** kann selbstverständlich auch in einer Einzelzelle eingesetzt werden. In diesem Fall wird der Kontaktring mit Hilfe des O-Rings an die Stromanschlußelemente innerhalb des Endflansches gedrückt.

In der dargestellten Ausführung sind die Elemente der Einzelzelle in einem gemeinsamen Rahmen **69** angeordnet.

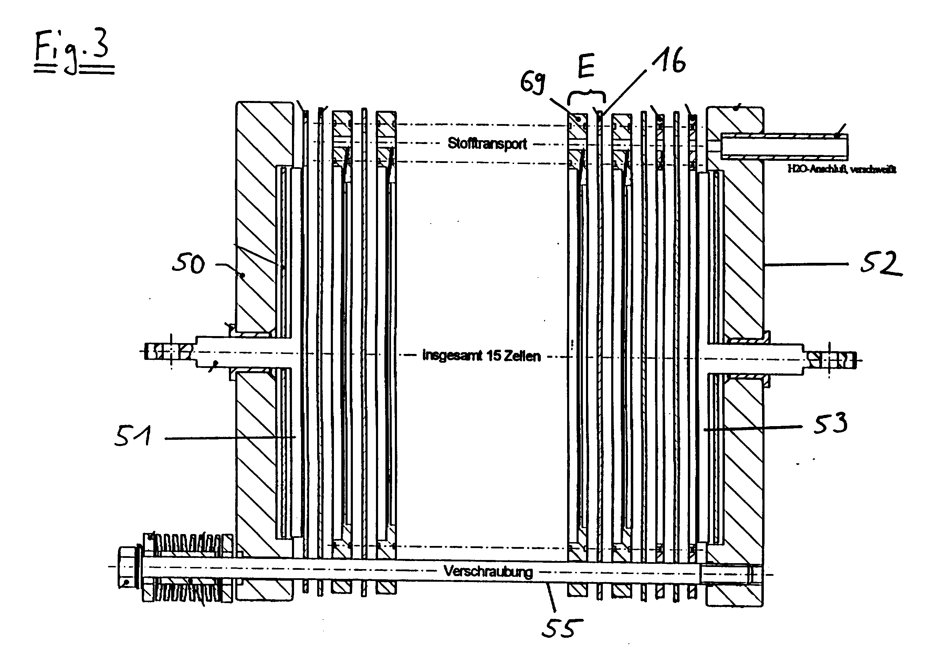

Fig. 3 zeigt einen Stack aus mehreren Einzelzellen **E** nach Fig. 2 (teilweise explodiert). Die Einzelzellen sind in zwei Flanschen **50,52,** über die die Stromzuführung erfolgt (Stromanschlußplatten **51**,**53**), eingepreßt. Die Einzelzellen **E** werden begrenzt von den Trennplatten **16**.

Die Eduktezuführung und Edukteabführung erfolgt, ausgehend von einer oder mehreren Sammelfluidzuführungen, parallel zu den einzelnen Zellen.
Die Abfuhr der Produktgase erfolgt ebenfalls parallel zu den einzelnen Zellen entweder mit einer oder mehreren Sammelleitungen.
Die Zu- und Abfuhrleitungen des Edukts und der Produktgase sind vorteilhaft in den Rahmen des Elektrolyseurs integriert, wobei dieser Gesamtrahmen durch Zusammenpressen der Einzelrahmen **69** entsteht. Hierzu werden die Zuganker **55** verwendet.
Die Rahmen **69** können z.B. aus KOH-beständigen Kunststoffwerkstoffen gefertigt werden und gegen die anliegenden Bauteile mit Flachdichtungen **80** (Fig. 2) oder Formdichtungen abgedichtet werden.

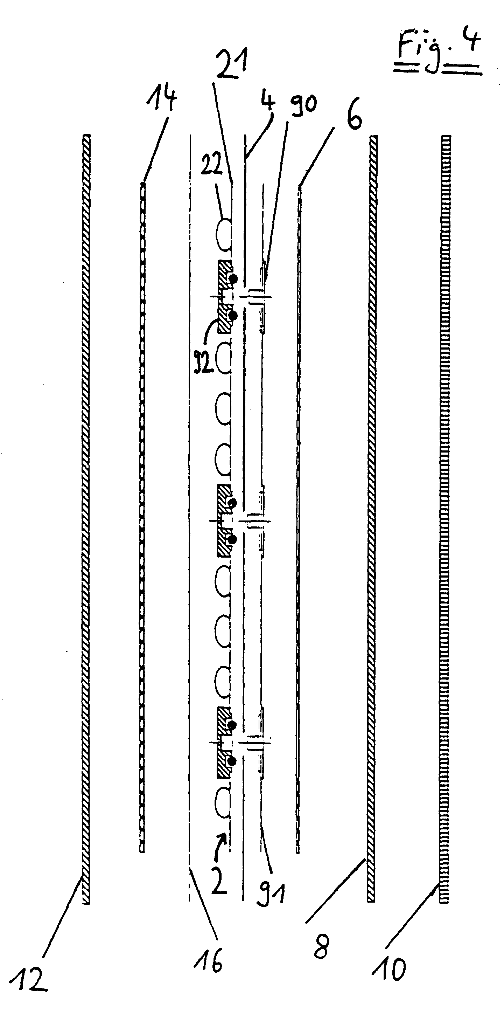

Fig. 4 zeigt eine weitere vorteilhafte Ausbildung des erfindungsgemäßen Elektrolyseurs, der hier als Stack ausgebildet ist (Explosionsdarstellung). Im linken Bereich sind Anode **12**, Abstandhalter **14** der anodenseitigen Produktkammer sowie die zweite leitfähige Platte **16** (=Trennplatte) einer Einzelzelle dargestellt. Daran schließen sich die Elemente der benachbarten Zelle an: Abstandshalter **2** (hier als Lochblech **21** mit Federelementen **22** ausgebildet) der Eduktkammer, Membran **4**, kathodenseitiger Abstandshalter **6**, Kathode **8**, Elektrolytmatrix **10.** Die Membran **4** weist an mehreren Stellen Durchbrechungen aus leitfähigem Material auf. Die Durchbrechungen sind bevorzugt gleichmäßig über die gesamte Membranfläche verteilt. In der gezeigten Ausführung werden die Durchbrechungen von einem Bolzen **90** sowie einer Buchse **92** als Gegenstück gebildet.

Zur Verbesserung der Handhabung können die Bolzen **90** an einem Lochblechs **91** angeordnet sein, so daß das Lochblech **91** mit den Bolzen **90** als Ganzes auf die Membran **4** aufgesetzt wird. Durch das Lochblech **91** werden die Bolzen untereinander elektrisch verbunden, was die Homogenität der Stromverteilung weiter verbessert. Die Oberseite eines Bolzenkopfs liegt im zusammengebauten Zustand jeweils an dem leitfähigen kathodenseitigen Abstandhalter **6** an. Die Buchsen **92** sind in dieser Ausführung auf dem Lochblech **21** des Abstandshalters **2** der Eduktkammer angeordnet.
Mit dieser Anordnung wird eine leitfähige Verbindung zwischen kathodenseitigem Abstandshalter **6** und der leitfähigen Platte **16** der benachbarten Zelle erreicht, wobei die schlecht leitende Membran **4** überbrückt wird. Es entsteht eine homogene Stromverteilung über die gesamte Querschnittsfläche der Membran
**4**. Anders als in den vorangegangenen Beispielen wird hier eine erste leitfähige Platte (Bezugsziffer **5** in Fig. 1,2) zwischen kathodenseitigem Abstandhalter **6** und Membran **4** nicht benötigt.

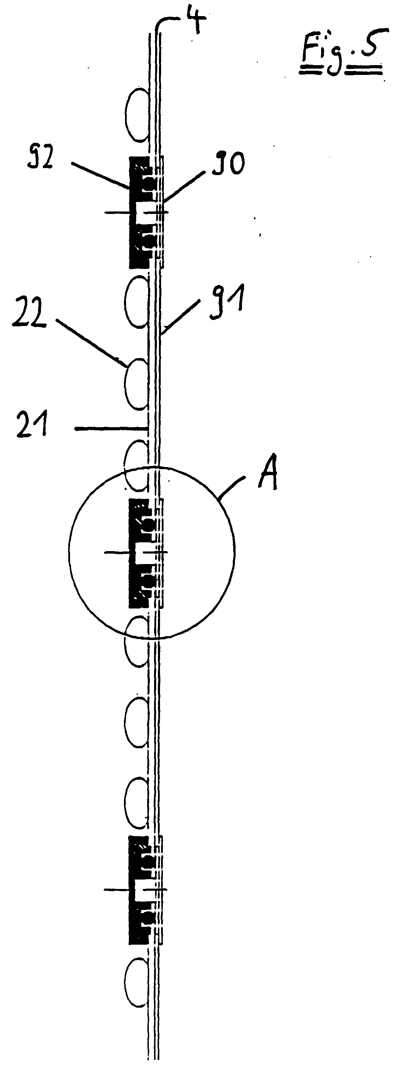

Fig. 5 zeigt in teilweise explodierter Darstellung den Aufbau in der unmittelbaren Umgebung der Membran **4** aus Fig. 4 im einzelnen. Der Abstandshalter der Eduktkammer umfaßt Lochblech **21** und Federelemente **22**. Zwischen dem Lochblech **21** des Abstandshalters und dem weiteren Lochblech 91, in dem die Bolzen **90** angeordnet sind, ist die Membran **4** angeordnet. Die Membran wird von den Bolzen **90** durchstoßen. Diese sind auf der anderen Seite der Membran mit Buchsen **92** verschweißt. Die Buchsen selbst sind auf dem Lochblech **21** angeordnet. Selbstverständlich können Bolzen **90** und Buchsen **92** bezüglich ihrer Anordnung auf den zwei Membranseiten auch vertauscht werden.

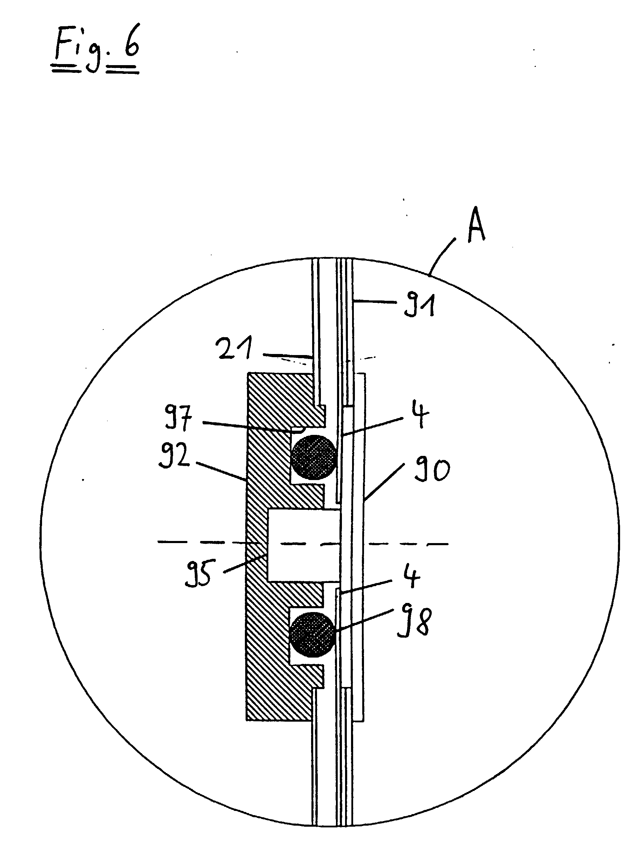

Fig. 6 zeigt das Detail A aus Fig. 5. Der Bolzen **90** ist an der Stirnfläche **95** des Bolzenschafts mit der Buchse **92** durch Punktschweißen verbunden. In einer Nut **97** der Buchse **92** ist ein O-Ring **98** zur Abdichtung angeordnet.

## Patentansprüche

1. Elektrolyseur mit folgenden Elementen:
- eine Eduktkammer
- eine Membran (**4**)
- eine kathodenseitige Produktkammer
- eine poröse Kathode (**8**)
- ein Diaphragma (**10**),
- eine poröse Anode (**12**), wobei in den Poren von Anode (**12**) und Kathode (**8**) ein flüssiger Elektrolyt fixierbar ist,
- eine anodenseitige Produktkammer,
**dadurch gekennzeichnet,** daß zwischen Membran (**4**) und der kathodenseitigen Produktkammer eine erste elektrisch leitfähige Platte (**5**) und benachbart zur anodenseitigen Produktkammer eine zweite elektrisch leitfähige Platte (**16**) vorhanden ist, wobei über diese beiden Platten (**5, 16**) die Stromzuführung und Stromabführung von und zu den Elektroden (**8, 12**) erfolgt.

2. Elektrolyseur nach Anspruch 1, **dadurch gekennzeichnet,** daß die erste (**5**) und zweite leitfähige Platte (**16**) direkt mit einer Stromquelle verbunden sind.

3. Elektrolyseur nach einem der Ansprüche 1 und 2, **dadurch gekennzeichnet,** daß er von Endflanschen (**50, 52**) eingefaßt ist.

4. Elektrolyseur nach einem der vorangehenden Ansprüche, **dadurch gekennzeichnet,** daß die Endflansche Stromanschlußelemente enthalten, die mit der ersten (**5**) und zweiten leitfähigen Platte (**16**) elektrisch verbunden sind.

5. Elektrolyseur nach einem der vorangehenden Ansprüche, **dadurch gekennzeichnet**, daß in der Eduktkammer und/oder in den Produktkammern elektrisch leitende Abstandshalter (**2, 6, 14**) vorhanden sind.

6. Elektrolyseur nach Anspruch 5, **dadurch gekennzeichnet,** daß die Abstandshalter (**2, 6, 14**) jeweils in separaten Rahmen (**32, 34, 36**) angeordnet sind.

7. Elektrolyseur nach Anspruch 6, **dadurch gekennzeichnet,** daß in dem Rahmen (**34**) für den Abstandshalter (**6**) der kathodenseitigen Produktkammer zusätzlich die Kathode (**8**) angeordnet ist.

8. Elektrolyseur nach Anspruch 6 oder 7, **dadurch gekennzeichnet**, daß in dem Rahmen (**36**) für den Abstandshalter (**14**) der anodenseitigen Produktkammer zusätzlich die Anode (**12**) angeordnet ist.

9. Elektrolyseur nach einem der vorangehenden Ansprüche 1 bis 5, **dadurch gekennzeichnet**, daß folgende Elemente in einem gemeinsamen Rahmen angeordnet sind:
- Abstandshalter (**6**) der kathodenseitigen Produktkammer
- Kathode (**8**)
- Diaphragma (**10**)
- Abstandshalter (**14**) der anodenseitigen Produktkammer
- Anode (**12**).

10. Elektrolyseur nach einem der vorangehenden Ansprüche, **dadurch gekennzeichnet,** daß innerhalb der Rahmen Zuganker angeordnet sind.

11. Elektrolyseur nach einem der vorangehenden Ansprüche, jedoch ohne die erste leitfähige Platte (**5**), **dadurch gekennzeichnet,** daß die Membran (**4)** von elektrisch leitfähigen Elementen (**90, 92**) durchbrochen ist.

12. Elektrolyseur nach Anspruch 11, **dadurch gekennzeichnet**, daß die elektrisch leitfähigen Durchbrechungen über die Membranfläche, bevorzugt regelmäßig, verteilt sind.

13. Elektrolyseur nach Anspruch 11 oder 12, **dadurch gekennzeichnet**, daß die Durchbrechungen einem Bolzen (**90**) auf der einen Membranseite und eine Buchse (**92**) auf der anderen Membranseite umfassen, die miteinander verbunden, bevorzugt verschweißt, sind.

14. Elektrolyseur nach Ansprüche 13, **dadurch gekennzeichnet,** daß zur Abdichtung eine O-Ring-Dichtung (**98**) in die Buchse (**92**) integriert ist.

15. Elektrolyseur nach eine der vorangehenden Ansprüche 13 oder 14, **dadurch gekennzeichnet,** daß die Bolzen (**90**) und/oder die Buchsen (**92**) jeweils an einer leitfähigen Wandung (**21, 91**) angeordnet sind.

16. Elektrolyseur, aus mehreren hintereinandergeschalteten Einzelzellen (**E**) nach einem der vorangehenden Ansprüche 1 bis 10, wobei die erste elektrisch leitfähige Platte (**5**) einer Einzelzelle mit der zweiten elektrisch leitfähigen Platte (**16**) der benachbarten Einzelzelle in elektrischem Kontakt steht.

17. Elektrolyseur nach Anspruch 16, **dadurch gekennzeichnet**, daß die erste leitfähige Platte (**5**) im wesentlichen über deren gesamten Umfang mit einem leitfähigen Kontaktelement (**60**) verbunden ist, wobei dieses Kontaktelement mit Hilfe einer Dichtung (**62**), die sich in einer Nut des Kontaktelements befindet, an die zweite leitfähige Platte (**16**) der benachbarten Einzelzelle gedrückt wird.

18. Elektrolyseur nach Anspruch 17, **dadurch gekennzeichnet**, daß an einem Absatz am Kontaktelement (**60**) eine Membranfassung (**66**) angeordnet ist, wobei mit Hilfe einer Dichtung (**67**), die sich in einer Nut der Membranfassung befindet, die Abdichtung erfolgt.

19. Elektrolyseur, aus mehreren hintereinandergeschalteten Einzelzellen nach einem der Ansprüche 11 bis 15.

20. Elektrolyseur nach einem der vorangehenden Ansprüche, **dadurch gekennzeichnet,** daß die Elemente einer Einzelzelle (**E**) in einem gemeinsamen Rahmen (**69**) angeordnet sind.

21. Elektrolyseur nach einem der vorangehenden Ansprüche, **dadurch gekennzeichnet**, daß innerhalb der Rahmen (**69**) Zuganker (**55**) angeordnet sind.

## Claims

1. Electrolyser having the following elements:
- an educt chamber,
- a membrane (4),
- a cathode-side product chamber,
- a porous cathode (8),
- a diaphragm (10),
- a porous anode (12), wherein a liquid electrolyte is arranged to be fixed in the pores of anode (12) and cathode (8),
- an anode-side product chamber,
**characterised in that** between the membrane (4) and the cathode-side product chamber there is a first electrically conductive plate (5) and adjacent to the anode-side product chamber there is a second electrically conductive plate (16), the supply and discharge of current respectively to and from the electrodes (8, 12) being effected by way of these two plates (5, 16).

2. Electrolyser according to claim 1, **characterised in that** the first (5) and second conductive plates (16) are connected directly to a power source.

3. Electrolyser according to one of claims 1 and 2, **characterised in that** it is enclosed by end flanges (50, 52).

4. Electrolyser according to any one of the preceding claims, **characterised in that** the end flanges contain power supply elements that are electrically connected to the first (5) and second conductive plate (16).

5. Electrolyser according to any one of the preceding claims, **characterised in that** electrically conductive spacers (2, 6,14) are present in the educt chamber and/or in the product chambers.

6. Electrolyser according to claim 5, **characterised in that** the spacers (2, 6, 14) are arranged in respective separate frames (32, 34, 36).

7. Electrolyser according to claim 6, **characterised in that** in the frame (34) for the spacer (6) of the cathode-side product chamber there is additionally arranged the cathode (8).

8. Electrolyser according to claim 6 or 7, **characterised in that** in the frame (36) for the spacer (14) of the anode-side product chamber there is additionally arranged the anode (12).

9. Electrolyser according to any one of the preceding claims 1 to 5, **characterised in that** the following elements are arranged in a common frame:
- spacer (6) for the cathode-side product chamber,
- cathode (8),
- diaphragm (10),
- spacer (14) of the anode-side product chamber,
- anode (12).

10. Electrolyser according to any one of the preceding claims, **characterised in that** tie-bolts are arranged inside the frames.

11. Electrolyser according to any one of the preceding claims, but without the first conductive plate (5), **characterised in that** the membrane (4) is penetrated by electrically conductive elements (90, 92).

12. Electrolyser according to claim 11, **characterised in that** the electrically conductive penetrating members are distributed, preferably regularly, over the membrane area.

13. Electrolyser according to claim 11 or 12, **characterised in that** the penetrating members comprise a stud (90) on one side of the membrane and a bushing (92) on the other side of the membrane, which are connected to one another, preferably by welding.

14. Electrolyser according to claim 13, **characterised in that** an O-ring seal (98) is integrated in the bushing (92) to provide a seal.

15. Electrolyser according to one of the preceding claims 13 and 14, **characterised in that** the studs (90) and/or the bushings (92) are arranged on a respective conductive wall (21, 91).

16. Electrolyser comprising a plurality of individual cells (E) according to any one of the preceding claims 1 to 10 connected in series, wherein the first electrically conductive plate (5) of an individual cell is in electrical contact with the second electrically conductive plate (16) of the adjacent individual cell.

17. Electrolyser according to claim 16, **characterised in that** the first conductive plate (5) is connected substantially over its entire periphery to a conductive contact element (60), this contact element being pressed by means of a gasket (62) that is located in a groove of the contact element against the second conductive plate (16) of the adjacent individual cell.

18. Electrolyser according to claim 17, **characterised in that** a membrane holder (66) is arranged on a shoulder on the contact element (60), the seal being effected by means of a gasket (67) that is located in a groove of the membrane holder.

19. Electrolyser comprising a plurality of individual cells according to any one of claims 11 to 15 connected in series.

20. Electrolyser according to any one of the preceding claims, **characterised in that** the elements of an individual cell (E) are arranged in a common frame (69).

21. Electrolyser according to any one of the preceding claims, **characterised in that** tie-bolts (55) are arranged inside the frames (69).

## Revendications

1. Électrolyseur comprenant les éléments suivants :
- une chambre d'éduit
- une membrane (4)
- une chambre de produit côté cathode
- une cathode poreuse (8)
- un diaphragme (10)
- une anode poreuse (12), un électrolyte liquide pouvant être fixé dans les pores de l'anode (12) et de la cathode (8),
- une chambre de produit côté anode,
caractérisé en ce qu'une première plaque électriquement conductrice (5) est disposée entre la membrane (4) et la chambre de produit côté cathode et une seconde plaque électriquement conductrice (16) est disposée au voisinage de la chambre de produit côté anode, l'arrivée de courant aux électrodes (8, 12) et la sortie de courant à partir de celles-ci s'effectuant par l'intermédiaire de ces deux plaques (5, 16).

2. Électrolyseur selon la revendication 1, caractérisé en ce que la première plaque conductrice (5) et la seconde plaque conductrice (16) sont directement connectées à une source de courant.

3. Électrolyseur selon l'une des revendications 1 et 2, caractérisé en ce qu'il est encadré par des flasques d'extrémité (50, 52).

4. Électrolyseur selon une des revendications précédentes, caractérisé en ce que les flasques d'extrémité contiennent des éléments de connexion électrique qui sont connectés électriquement aux première (5) et seconde plaques conductrices (16).

5. Électrolyseur selon une des revendications précédentes, caractérisé en ce que des entretoises électriquement conductrices (2, 6, 14) sont prévues dans la chambre d'éduit et/ou dans les chambres de produit.

6. Électrolyseur selon la revendication 5, caractérisé en ce que les entretoises (2, 6, 14) sont chacune disposées dans des cadres séparés (32, 34, 36).

7. Électrolyseur selon la revendication 6, caractérisé en ce que la cathode (8) est elle aussi disposée dans le cadre (34) destiné à l'entretoise (6) de la chambre de produit côté cathode.

8. Électrolyseur selon la revendication 6 ou 7, caractérisé en ce que l'anode (12) est elle aussi disposée dans le cadre (36) destiné à l'entretoise (14) de la chambre de produit côté anode.

9. Électrolyseur selon une des revendications précédentes 1 à 5, caractérisé en ce que les éléments suivants sont disposés dans un cadre commun :
- entretoise (6) de la chambre de produit côté cathode
- cathode (8)
- diaphragme (10)
- entretoise (14) de la chambre de produit côté anode
- anode (12).

10. Électrolyseur selon une des revendications précédentes, caractérisé en ce que des tirants d'ancrage sont disposés à l'intérieur des cadres.

11. Électrolyseur selon une des revendications précédentes mais dépourvu de première plaque conductrice (5), caractérisé en ce que la membrane (4) est traversée par des éléments électriquement conducteurs (90, 92).

12. Électrolyseur selon la revendication 11, caractérisé en ce que les moyens traversants électriquement conducteurs sont répartis, de préférence de manière régulière, sur la surface de la membrane.

13. Électrolyseur selon la revendication 11 ou 12, caractérisé en ce que les moyens traversants comprennent un téton (90) sur l'un des côtés de la membrane et une douille (92) sur l'autre côté de la membrane, qui sont reliés entre eux, de préférence par soudage.

14. Électrolyseur selon la revendication 13, caractérisé en ce qu'un joint torique (98) est intégré à la douille (92) pour assurer l'étanchéité.

15. Électrolyseur selon une des revendications précédentes 13 ou 14, caractérisé en ce que les tétons (90) et/ou les douilles (92) sont disposés respectivement sur une paroi conductrice (21, 91).

16. Électrolyseur constitué de plusieurs cellules individuelles successives (E) selon une des revendications précédentes 1 à 10, dans lequel la première plaque électriquement conductrice (5) d'une cellule individuelle est en contact électrique avec la seconde plaque électriquement conductrice (16) de la cellule individuelle voisine.

17. Électrolyseur selon la revendication 16, caractérisé en ce que la première plaque conductrice (5) est reliée, sensiblement sur toute sa périphérie, à un élément de contact conducteur (60), ledit élément de contact étant poussé contre la seconde plaque conductrice (16) de la cellule individuelle voisine au moyen d'un joint (62) qui se trouve dans une gorge de l'élément de contact.

18. Électrolyseur selon la revendication 17, caractérisé en ce qu'un support de membrane (66) est disposé dans un décrochement de l'élément de contact (60), l'étanchéité étant assurée par un joint (67) qui se trouve dans une gorge du support de membrane.

19. Électrolyseur constitué de plusieurs cellules individuelles successives, selon l'une des revendications 11 à 15.

20. Électrolyseur selon une des revendications précédentes, caractérisé en ce que les éléments d'une cellule individuelle (E) sont disposés dans un cadre commun (69).

21. Électrolyseur selon une des revendications précédentes, caractérisé en ce que des tirants d'ancrage (55) sont disposés à l'intérieur des cadres (69).
